# EUROPEAN PATENT SPECIFICATION

(11) **EP 3 459 691 B1**
(45) Date of publication and mention of the grant of the patent: **07.04.2021**
(21) Application number: 17799662.6
(22) Date of filing: 17.05.2017
(51) Int. Cl.: B25J 11/00, B25J 9/00, B25J 9/16, B25J 19/02, A47L 9/28, G05D 1/02

(54) **ROBOT VACUUM CLEANER**
ROBOTISCHER STAUBSAUGER
ASPIRATEUR ROBOT

(30) Priority: 17.05.2016 KR 20160060444; 27.10.2016 KR 20160141106
(43) Date of publication of application: 27.03.2019
(73) Proprietor: LG Electronics Inc., Seoul 07336 (KR)
(72) Inventor: JUN, Woochan, Seoul 08592 (KR); SUNG, Chulmo, Seoul 08592 (KR)
(74) Representative: Vossius & Partner Patentanwälte Rechtsanwälte mbB
(86) International application number: PCT/KR2017/005136
(87) International publication number: WO 2017/200305

(56) References cited:
- EP-A1- 2 677 386
- CN-U- 205 031 182
- CN-U- 205 031 182
- JP-A- 2013 104 858
- KR-A- 20160 043 841
- US-A- 4 954 962
- US-A1- 2015 115 876
- US-A1- 2015 168 954
- US-A1- 2015 168 954

## Description

### [Technical Field]

The present invention relates to a robot cleaner.

### [Background Art]

In general, a robot cleaner is an apparatus that automatically performs cleaning by suctioning foreign substances, such as dust, from a floor while traveling autonomously within a zone to be cleaned without a user's operation.

The robot cleaner detects the distance to obstacles, such as furniture, office equipment, walls, and the like, which are installed in a zone to be cleaned, and, based on the detection, the robot cleaner maps the zone to be cleaned or bypasses the obstacles by controlling driving of left and right wheels included in the robot cleaner. In the existing technology, the travelling distance of the robot cleaner may be measured by a sensor that faces the ceiling or floor, and the distance to an obstacle is calculated based on the measurement. However, this measurement of distance to an obstacle is an indirect estimate based on the travelling distance of the robot cleaner, and inaccuracies in measuring the travel distance of the robot cleaner results in errors in determining the location of the obstacles. Errors in determining the travel distance may arise due to, for example, indentations in the floor. In another example, a robot cleaner may make distance measurements by emitting infrared light or ultrasonic waves and measuring reflections from obstacles, and these types of measurement techniques may include considerable error due to the large amount of light or sound that is scattered by such obstacles.

In recent years, technology has been developed to control travel of the robot cleaner by emitting light in a specific pattern ahead of the robot cleaner, capturing an image of the emitted light, extracting the pattern from the captured image, and recognizing obstacles in the zone to be cleaned. For example, Korean Patent Laid-Open Publication No. 10-2013-0141979 (hereinafter referred to as "'979 disclosure") discloses a robot cleaner that includes a light source module configured to emit light in a cross-shaped pattern and a camera module configured to capture a forward image of the cleaner. The robot cleaner extracts the pattern from the image acquired via the camera module, and recognizes obstacles in the zone to be cleaned based on the extracted pattern. However, this robot cleaner has one light source module configured to emit light at a uniform angle, whereby the range within which obstacles may be sensed is limited, and the robot cleaner has difficulty in recognizing the stereoscopic shape of an obstacle that vertically extends above a certain height. Particularly, the robot cleaner in the '979 disclosure may not sense an obstacle that is located higher than the light source module or an obstacle that is higher from the floor than the light source module due to the features of the robot cleaner in which light is emitted in a cross-shaped pattern toward the floor in the zone to be cleaned.

In the '979 disclosure, the height of an obstacle may be measured, to some extent, by radiating a vertical line pattern of light emitted from the camera module to the obstacle. However, the obstacle information acquired in this manner is only about the portion of the obstacle that is irradiated with the vertical line pattern of light.

When an obstacle is, for example, a bed having a mattress placed on the legs of the bed with a predetermined space defined below the mattress, a control unit of the robot cleaner may fail to recognize the mattress because the cross-shaped pattern of light emitted from the light source module is radiated to the floor in the space depending on the position of the robot cleaner relative to the bed. Thus, the control unit would control the robot cleaner to continue to travel toward the bed. Depending on the height of the space, the robot cleaner may not enter the space, and may collide with a structure, such as a frame that supports the mattress, or may become jammed between the floor and the frame.

US 2015/168954 A1 relates to a system and method through which a mobile device, such as a robot, can detect obstacles while navigating in an environment using a laser pattern to augment the visible field of a visual sensor and measure the distance to objects.

CN 205031182 U relates to the field of cleaning technology, and more particularly to a cleaning robot.

US 2015/115876 A1 relates to a mobile robot having a self-charging function, a charging apparatus to charge the mobile robot, and a mobile robot system including the mobile robot and the charging apparatus.

### [Disclosure]

### [Technical Problem]

Therefore, the present invention has been made in view of the above problems, and it is an object of the present invention to provide a robot cleaner, which may obtain more concrete information regarding an obstacle using patterns of light emitted from two pattern emission units, which are arranged at upper and lower positions.

It is another object of the present invention to provide a robot cleaner, which may be prevented from being jammed in a space having a predetermined height, which is defined between an obstacle such as a bed and the floor in a zone to be cleaned, while traveling.

It is a further object of the present invention to provide a robot cleaner, which may more easily perform the process of calibrating a first pattern emission unit and a second pattern emission unit.

### [Technical Solution]

A robot cleaner of the present invention includes a main body configured to travel in a zone to be cleaned and to suction foreign substances from a floor in the zone to be cleaned, an image acquisition unit provided on the main body and configured to capture an image of a predetermined area ahead of the main body, a first pattern emission unit provided on the main body and configured to emit a first pattern of light downwards to the predetermined area, and a second pattern emission unit provided on the main body at a position below the first pattern emission unit and configured to emit a second pattern of light upwards to the predetermined area.

A path along which the first pattern of light is emitted and a path along which the second pattern of light is emitted may cross each other when viewed from a side of the main body.

An intersection (d1) of the path along which the first pattern of light is emitted and the path along which the second pattern of light is emitted may be located closer to the main body than a point (d2) on the floor at which an image begins to be captured by the image acquisition unit.

The image acquisition unit may include a lens having an optical axis that is oriented in a horizontal direction and may have a view angle ranging from 100° to 110°.

The image acquisition unit may capture an image of a portion of the floor that is located 110 mm to 120 mm or more from the main body.

Each of the first pattern and the second pattern may include a horizontal line.

The first pattern of light and the second pattern of light may have different patterns from each other.

The image acquisition unit, the first pattern emission unit and the second pattern emission unit may be aligned with each other on the front surface of the main body in a vertical direction.

The image acquisition unit may be located below the first pattern emission unit and the second pattern emission unit.

The first pattern emission unit may emit the first pattern of light at a first vertical emission angle, and the second pattern emission unit may emit the second pattern of light at a second vertical emission angle.

The image acquisition unit may be located between the first pattern emission unit and the second pattern emission unit.

The first pattern emission unit and the second pattern emission unit may emit light at the same vertical emission angle. The vertical emission angle may range from 20° to 30°.

In accordance with another aspect of the present invention, a robot cleaner includes a casing forming an external appearance, a left wheel and a right wheel rotatably provided on the casing, a suction module provided in the casing and configured to suction foreign substances from a floor in a zone to be cleaned, and an obstacle sensor provided on the front surface of the casing, wherein the obstacle sensor includes a module frame coupled to the front surface of the casing, an image acquisition unit provided on the module frame and configured to capture an image of a predetermined area ahead of the casing, a first pattern emission unit provided on the module frame and configured to emit a first pattern of light downwards to the predetermined area, and a second pattern emission unit provided on the module frame at a position below the first pattern emission unit and configured to emit a second pattern of light upwards to the predetermined area.

A path along which the first pattern of light is emitted and a path along which the second pattern of light is emitted may cross each other when viewed from a side of the casing. An intersection of the path along which the first pattern of light is emitted and the path along which the second pattern of light is emitted may be located closer to the casing than a point on the floor at which an image begins to be captured by the image acquisition unit. Each of the first pattern and the second pattern may include a horizontal line.

The image acquisition unit, the first pattern emission unit and the second pattern emission unit may be aligned with each other in a vertical direction.

The image acquisition unit may be located below the first pattern emission unit and the second pattern emission unit.

The image acquisition unit may be located between the first pattern emission unit and the second pattern emission unit. The first pattern emission unit and the second pattern emission unit may be arranged symmetrically with respect to the image acquisition unit.

### [Description of Drawings]

FIG. 1 is a perspective view of a robot cleaner according to an embodiment of the present invention.
FIG. 2 is a view illustrating the horizontal view angle of the robot cleaner of FIG. 1.
FIG. 3 is a front view of the robot cleaner of FIG. 1.
FIG. 4 is a bottom view of the robot cleaner of FIG. 1.
FIG. 5 is a block diagram illustrating the major elements of the robot cleaner of FIG. 1.
FIG. 6 shows a front view (a) and a side view (b) of an obstacle sensor.
FIG. 7 is a view illustrating the radiation range and the obstacle detection range of the obstacle sensor.
FIG. 8 shows a view (a) illustrating first patterned light displayed in an acquired image in the process of calibrating a first pattern emission unit and a view (b) illustrating second patterned light displayed in an acquired image in the process of calibrating a second pattern emission unit.
FIG. 9 shows a view (a) illustrating an image acquired when the robot cleaner is located at a first position and an obstacle is located ahead of the robot cleaner and a view (b) illustrating an image acquired when the position of the robot cleaner is changed to a second position.
FIG. 10 is a view illustrating an image acquired when the first patterned light and the second patterned light are incident on an obstacle.
FIG. 11 is a perspective view of a robot cleaner according to another embodiment of the present invention.
FIG. 12 shows a front view (a) and a side view (b) of an obstacle sensor illustrated in FIG. 11.
FIG. 13 is a view illustrating the radiation range and the obstacle detection range of the obstacle sensor of FIG. 12.
FIG. 14 shows views illustrating patterns of light emitted by a first pattern emission unit of the obstacle sensor of FIG. 12.
FIG. 15 shows views illustrating patterns of light emitted to an obstacle in the robot cleaners according to the embodiments of the present invention.

### [Best Mode]

Advantages and features of the present invention and methods for achieving them will be made clear from embodiments described below in detail with reference to the accompanying drawings. The present invention may, however, be embodied in many different forms, and should not be construed as being limited to the embodiments set forth herein. Rather, these embodiments are provided so that this disclosure will be thorough and complete, and will fully convey the scope of the invention to those skilled in the art. The present invention is defined only by the scope of the claims. The same reference numerals used throughout the specification refer to the same constituent elements.

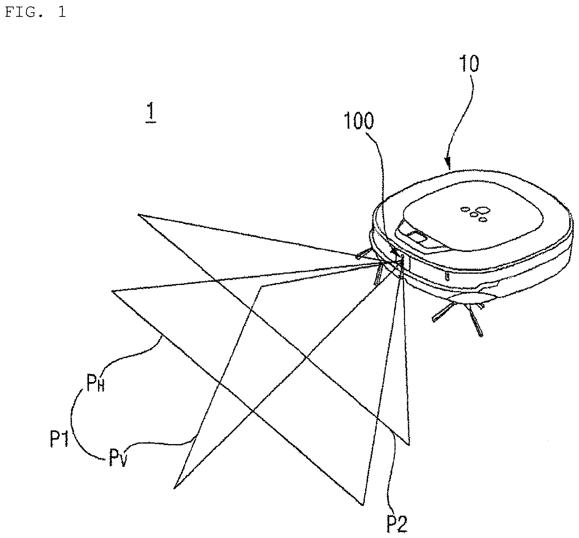

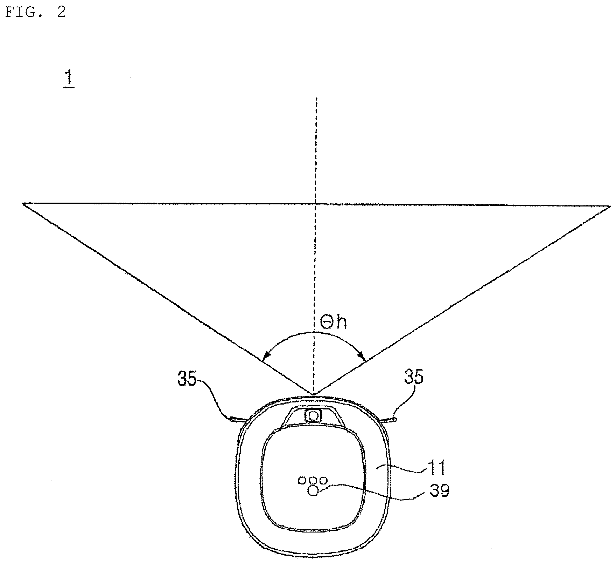

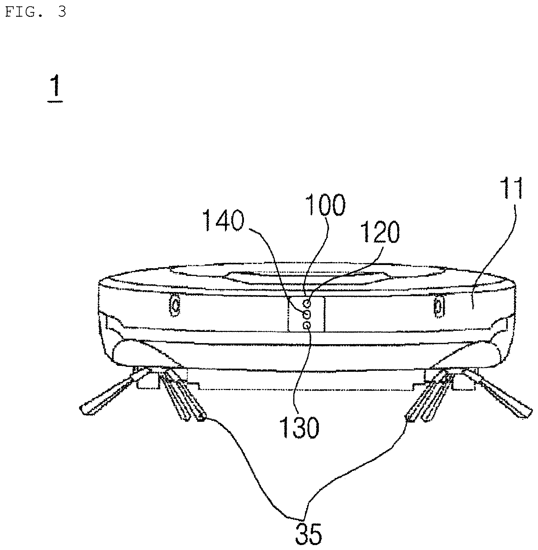

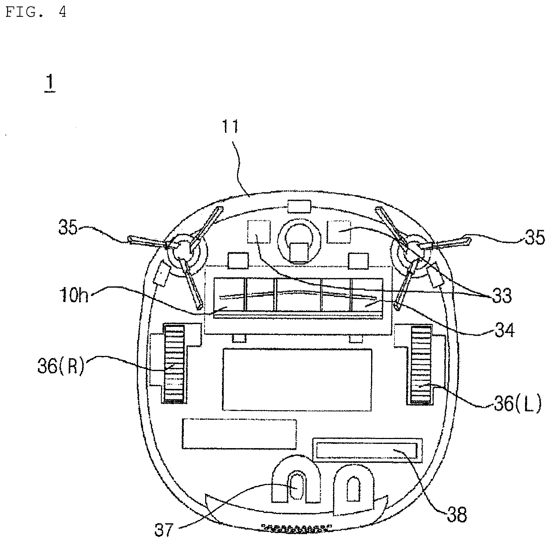

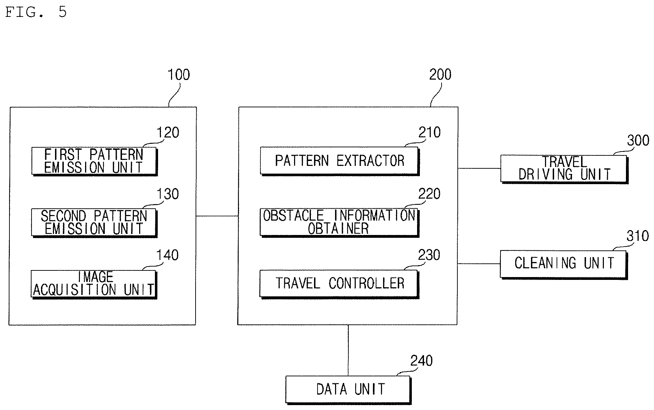

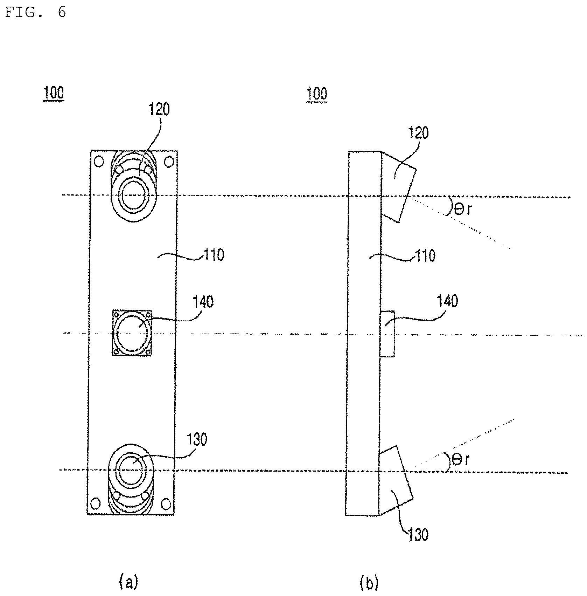

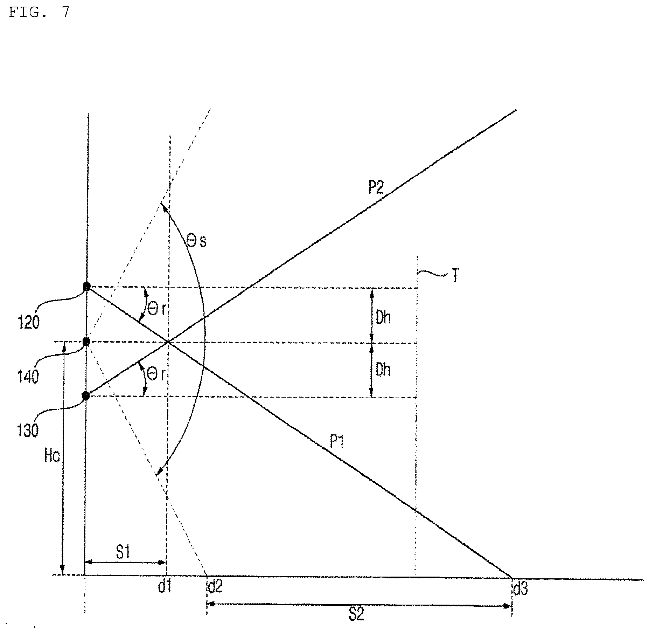

FIG. 1 is a perspective view of a robot cleaner according to an embodiment of the present invention. FIG. 2 is a view illustrating the horizontal view angle of the robot cleaner of FIG. 1. FIG. 3 is a front view of the robot cleaner of FIG. 1. FIG. 4 is a bottom view of the robot cleaner of FIG. 1. FIG. 5 is a block diagram illustrating the major elements of the robot cleaner of FIG. 1. FIG. 6 shows a front view (a) and a side view (b) of an obstacle sensor. FIG. 7 is a view illustrating the radiation range and the obstacle detection range of the obstacle sensor.

Referring to FIGs. 1 to 7, the robot cleaner 1 according to an embodiment of the present invention may include a main body 10, which travels on a floor in a zone to be cleaned and suctions foreign substances, such as dust, from the floor, and an obstacle sensor 100 provided on the front surface of the main body 10.

The main body 10 may include a casing 11, which forms the external appearance of the main body 10 and internally defines a space in which constituent elements of the main body 10 are accommodated, a suction unit 34, which is provided in the casing 11 to suction foreign substances, such as dust or waste, and a left wheel 36L and a right wheel 36R, which are rotatably provided on the casing 11. The main body 10 travels on the floor in the zone to be cleaned via rotation of the left wheel 36L and the right wheel 36R, and in this process, foreign substances are suctioned into the main body 10 through the suction unit 34.

The suction unit 34 may include a suction fan (not illustrated), which generates suction force, and a suction port 10h, through which an air stream generated by the rotation of the suction fan is suctioned. The suction unit 34 may further include a filter (not illustrated), which collects foreign substances from the air stream suctioned through the suction port 10h, and a foreign substance collection container (not illustrated), in which the foreign substances collected by the filter accumulate.

In addition, the main body 10 may include a travel driving unit 300, which drives the left wheel 36L and the right wheel 36R. The travel driving unit 300 may include at least one driving motor. The at least one driving motor may include a left-wheel driving motor configured to rotate the left wheel 36L and a right-wheel driving motor configured to rotate the right wheel 36R.

A controller 200 may include a travel controller 230, which controls the travel driving unit 300. The travel controller 230 may cause the main body 10 to travel forward or backward or to rotate by separately controlling the operation of the left-wheel driving motor and the right-wheel driving motor. For example, the left-wheel driving motor and the right-wheel driving motor are rotated in the same direction to cause the main body 10 to travel forwards, and the travel direction of the main body 10 may be changed when the left-wheel driving motor and the right-wheel driving motor are rotated at different speeds or in opposite directions. At least one auxiliary wheel 37 may be further provided on the main body 10 in order to stably support the main body 10.

A data unit 240 stores the acquired image input from the obstacle sensor 100, reference data used for an obstacle information obtainer 220 to determine an obstacle, and obstacle information regarding the sensed obstacle. In addition, the data unit 240 may store control data used to control the operation of the robot cleaner 1, data regarding cleaning modes of the robot cleaner 1, and a map that is generated in the robot cleaner 1 or received from an external source.

A cleaning unit 310 operates brushes to allow dust or foreign substances around the robot cleaner 1 to be easily suctioned, and operates the suction unit to suction dust or foreign substances. The cleaning unit 310 controls the operation of the suction fan provided in the suction unit 34, which suctions foreign substances such as dust or waste, thereby causing the dust to be introduced into the foreign substance collection container through the suction port.

In addition, the data unit 240 may store data readable by a microprocessor, and may include Hard Disk Drive (HDD), Solid State Disk (SSD), Silicon Disk Drive (SDD), ROM, RAM, CD-ROM, a magnetic tape, a floppy disk, and an optical data storage device.

Brushes 35 may be provided on the front side of the bottom surface of the casing 11. Each of the brushes 35 may include a plurality of blades or bristles that extend radially. Dust is removed from the floor in the zone to be cleaned through rotation of the brushes 35, and in turn, the dust removed from the floor is suctioned through the suction port 10h to thereby be collected in the collection container.

A control panel 39 may be provided on the top surface of the casing 11 so as to receive various commands for controlling the robot cleaner 1 from a user.

A rechargeable battery 38 is provided in the main body 10. The charging of the battery 38 may be accomplished when a charging terminal 33 of the battery 38 is connected to a commercial power source (e.g. a power plug in the house) or when the main body 10 is docked with a separate charging station (not illustrated) that is connected to the commercial power source so that the charging terminal 33 is electrically connected to the commercial power source. Electrical constituent elements of the robot cleaner 1 may receive power from the battery 38, and thus the robot cleaner 1 may perform autonomous traveling when the battery 38 is charged, even if the robot cleaner 1 is electrically disconnected from the commercial power source.

The obstacle sensor 100 may be provided on the front surface of the main body 10. The obstacle sensor 100 includes a first pattern emission unit 120, a second pattern emission unit 130, and an image acquisition unit 140. The image acquisition unit 140 captures an image of a predetermined area ahead of the main body 10. The first pattern emission unit 120 emits a first pattern of light downwards to the area. The second pattern emission unit 130 is provided below the first pattern emission unit 120, and emits a second pattern of light upwards to the area.

In greater detail, referring to FIG. 6, the obstacle sensor 100 may further include a module frame 110, which is fixed to the front surface of the casing 11 and is vertically elongated. The first pattern emission unit 120, the second pattern emission unit 130 and the image acquisition unit 140 may be fixed to the module frame 110. In some embodiments, the first pattern emission unit 120, the second pattern emission unit 130 and/or the image acquisition unit 140 may be directly fixed to the casing 11 without the module frame 110.

Each of the pattern emission units 120 and 130 may include a light source and an optical pattern projection element (OPPE), which generates a predetermined pattern when penetrated by light emitted from the light source. The light source may be a laser diode (LD), a light-emitting diode (LED), or the like. Laser light has excellent monochromaticity, straightness and connectivity properties, compared to other light sources, thereby enabling precise distance measurement. Particularly, since infrared light or visible light has a high deviation in precision in distance measurement depending on factors such as the color and the material of a target object, a laser diode may be used as the light source. The OPPE may include a lens and a diffractive optical element (DOE). Depending on the configuration of the OPPE included in each of the pattern emission units 120 and 130, light may be emitted in various patterns.

The first pattern emission unit 120 may emit a first pattern of light P1 (hereinafter referred to as first patterned light) forwards and downwards from the main body 10. Thus, the first patterned light P1 may be incident on the floor in the zone to be cleaned. The first patterned light P1 may have a cross-shaped pattern that includes a horizontal line Ph and a vertical line Pv that intersect.

The first pattern emission unit 120, the image acquisition unit 140 and the second pattern emission unit 130 may be aligned with each other. The image acquisition unit 140 may be located between the first pattern emission unit 120 and the second pattern emission unit 130, without being limited thereto.

In the embodiment, the first pattern emission unit 120 may be located above the image acquisition unit 140, and may emit the first patterned light P1 forwards and downwards from the main body 10, to thereby sense an obstacle that is located lower than the first pattern emission unit 120. The second pattern emission unit 130 may be located below the image acquisition unit 140, and may emit a second pattern of light P2 (hereinafter referred to as second patterned light) forwards and upwards from the main body 10. Thus, the second patterned light P2 may be incident on the wall or at least a portion of an obstacle that is located at a position higher than at least the second pattern emission unit 130 from the floor in the zone to be cleaned.

The second patterned light P2 may have a different pattern from that of the first patterned light P1, and may include, for example, a horizontal line. The horizontal line may not necessarily be a continuous line, but may be a dotted line, as illustrated in the drawings.

In FIG. 2, "θh" designates the horizontal emission angle of the first patterned light P1 emitted from the first pattern emission unit 120. The horizontal emission angle represents an angle formed between both ends of the horizontal line Ph and the first pattern emission unit 120. The horizontal emission angle may be set within the range of 130° to 140°, without being limited thereto. The dotted line in FIG. 2 represents a direction forward from the robot cleaner 1, and the first patterned light P1 may be formed to be symmetrical with respect to the dotted line.

Similar to the first pattern emission unit 120, the horizontal emission angle of the second pattern emission unit 130 may be set within the range of 130° to 140°, and in some embodiments, the second patterned light P2 may be emitted at the same horizontal emission angle as that of the first pattern emission unit 120. In this case, the second patterned light P2 may also be formed to be symmetrical with respect to the dotted line in FIG. 2.

The image acquisition unit 140 may acquire a forward image of the main body 10. Particularly, the patterned light P1 and P2 is displayed in the image (hereinafter referred to as an acquired image) acquired by the image acquisition unit 140. Hereinafter, images of the patterned light P1 and P2 displayed in the acquired image will be referred to as optical patterns. Since the optical patterns are images, projected on the image sensor, of the patterned light P1 and P2 incident on the actual space, the optical patterns are denoted by the same reference numerals as the patterned light P1 and P2. An image corresponding to the first patterned light P1 and an image corresponding to the second patterned light P2 are respectively referred to as a first optical pattern P1 and a second optical pattern P2.

The image acquisition unit 140 may include a digital camera, which converts an image of a subject into an electrical signal, converts the electrical signal into a digital signal, and then stores the digital signal in a memory device. The digital camera may include an image sensor (not illustrated) and an image-processing module (not illustrated).

The image sensor is a device that converts an optical image into an electrical signal, and is configured as a chip having a plurality of photodiodes integrated therein. For example, the photodiodes may be pixels. When light, having passed through the lens, forms an image on the chip, charges are accumulated in the respective pixels, and the charges accumulated in the pixels are converted into an electrical signal (e.g. voltage). As is well known, a charge coupled device (CCD), a complementary metal oxide semiconductor (CMOS), or the like may be used as the image sensor.

The image-processing module generates a digital image based on an analog signal output from the image sensor. The image-processing module may include an A/D converter configured to convert the analog signal into a digital signal, a buffer memory configured to temporarily record digital data according to the digital signal output from the A/D converter, and a digital signal processor (DSP) configured to generate a digital image by processing the data recorded in the buffer memory.

In addition, the robot cleaner 1 may include a data storage unit (not illustrated), which stores data readable by a microprocessor and is configured as Hard Disk Drive (HDD), Solid State Disk (SSD), Silicon Disk Drive (SDD), ROM, RAM, CD-ROM, a magnetic tape, a floppy disk, or an optical data storage device.

The controller 200 may include a pattern extractor 210, which detects the optical patterns P1 and P2 from the image (the acquired image) acquired by the image acquisition unit 140. The pattern extractor 210 may detect features, such as dots, lines and planes, with respect to predetermined pixels that constitute the acquired image, and may detect the optical patterns P1 and P2 or the dots, lines and planes constituting the optical patterns P1 and P2 based on the detected features.

For example, the pattern extractor 210 may extract line segments formed by successive pixels that are brighter than the surroundings, thereby extracting the horizontal line Ph and the vertical line Pv, which form the first optical pattern P1, and the horizontal line P2 that forms the second optical pattern P2.

However, the present invention is not limited thereto, and various methods of extracting a desired pattern from a digital image are already known. Thus, the pattern extractor 210 may extract the first optical pattern P1 and the second optical pattern P2 using any one of these known technologies.

Hereinafter, the angle formed between the direction in which the first pattern emission unit 120 or the second pattern emission unit 130 emits light and a horizontal line is referred to as a vertical emission angle. Specifically, the vertical emission angle may be defined as the angle formed between the direction in which the optical axis of the lens included in each of the pattern emission units 120 and 130 is oriented and the horizontal line.

The first pattern emission unit 120 and the second pattern emission unit 130 may be arranged symmetrically in the vertical direction. Particularly, the first pattern emission unit 120 and the second pattern emission unit 130 may be arranged along a predetermined vertical line, the first pattern emission unit 120 may emit the first patterned light P1 downwards at a first vertical emission angle, and the second pattern emission unit 130 may emit the second patterned light P2 upwards at a second vertical emission angle. At least one of the first vertical emission angle and the second vertical emission angle may be set within the range of 20° to 30°, without being limited thereto.

The first vertical emission angle and the second vertical emission angle may have the same value θr. However, the present invention is not limited thereto. In some embodiments, the first vertical emission angle and the second vertical emission angle may have different values from each other. Particularly, θr may be set within the range of 20° to 30°, without being limited thereto.

The first pattern emission unit 120 and the second pattern emission unit 130 may be arranged symmetrically with respect to the image acquisition unit 140. Referring to FIG. 7, the first pattern emission unit 120 may be upwards spaced apart from the image acquisition unit 140 by a distance Dh, and the second pattern emission unit 130 may be downwards spaced apart from the image acquisition unit 140 by the same distance Dh. Hereinafter, the angle formed between the direction in which the first pattern emission unit 120 or the second pattern emission unit 130 emits light and a horizontal line is referred to as a vertical emission angle. Specifically, the vertical emission angle may be defined as an angle formed between the direction in which the optical axis of the lens included in each of the pattern emission units 120 and 130 is oriented and the horizontal line.

In this configuration, in which the first pattern emission unit 120 and the second pattern emission unit 130 are arranged symmetrically with respect to the image acquisition unit 140 and emit light at the same vertical emission angle θr in opposite directions, calibration or product initialization may be easily performed.

When the patterned light emitted from the first pattern emission unit 120 and/or the second pattern emission unit 130 is incident on an obstacle, the positions of the optical patterns P1 and P2 in the acquired image vary depending on the distance to the obstacle from the first pattern emission unit 120. For example, when the first patterned light P1 and the second patterned light P2 are incident on a specific obstacle, as the obstacle is located closer to the robot cleaner 1, the first optical pattern P1, specifically, the horizontal pattern Ph, is displayed at a higher position in the acquired image, whereas the second optical pattern P2 is displayed at a lower position in the acquired image. That is, data on distances to obstacles, which correspond to rows (lines configured as pixels arranged in the transverse direction) constituting an image generated by the image acquisition unit 140, is stored in advance. When the optical patterns P1 and P2, detected in the image acquired by the image acquisition unit 140, are detected in a specific row, the position of the obstacle may be estimated based on data on the distance to the obstacle that corresponds to the row.

In order to accurately perform the above-described process, it is a prerequisite to arrange the first pattern emission unit 120 and the second pattern emission unit 130 so as to precisely emit light at a predetermined vertical emission angle θr. Whether or not this prerequisite is satisfied may be inspected in a calibration process. The calibration process may be performed as follows.

The obstacle sensor 100 is fixed, and a vertical incident plate T (see FIG. 7) having a plane that faces the obstacle sensor 100 is disposed at a given distance ahead of the obstacle sensor 100. The incident plate T may be located at a position where the first patterned light P1 is incident.

In this state, the first pattern emission unit 120 emits light, and the image acquisition unit 140 acquires an image. The first optical pattern P1 incident on the incident plane T is displayed in the acquired image. Here, since the distance from the obstacle sensor 100 to the incident plate T is already known, the horizontal line Ph of the first optical pattern P1 is displayed at a predetermined position ref1 (hereinafter referred to as a reference position) in the acquired image, so long as the obstacle sensor 100 is normally manufactured without defects.

Referring to FIG. 7, the reference position ref1 is a reference to determine a normal state, i.e. the state in which no obstacle is present ahead of the robot cleaner and in which the floor on which the robot cleaner is placed is flat. The reference position ref1 is the position at which the first optical pattern P1 is displayed when the main body 10 is placed on a flat floor. When the first optical pattern P1 is emitted to d3, the image acquisition unit 140 is located at a position at which the image of the first optical pattern P1 is captured.

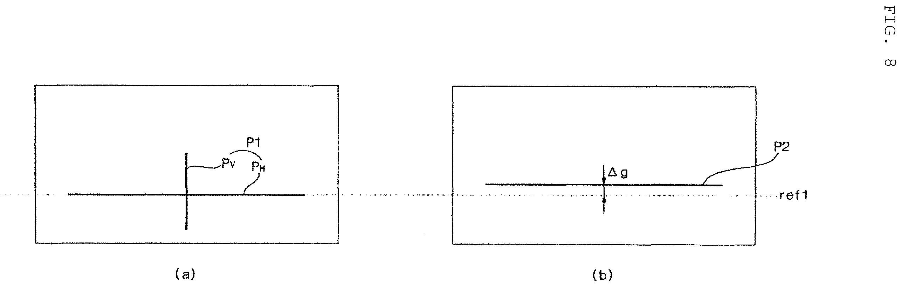

FIG. 8(a) illustrates the first optical pattern P1 displayed in the acquired image in the above-described process, and shows the case in which the horizontal line Ph is detected at the reference position ref1.

Subsequently, the direction in which the second pattern emission unit 130 emits light is inspected. This process may be performed by repeating the above-described calibration process after turning the obstacle sensor 100 upside down. That is, after the obstacle sensor 100 is turned upside down so that the second pattern emission unit 130 is located above the image acquisition unit 140 and emits light, the image acquisition unit 140 acquires an image in which the second optical pattern P2 focused on the incident plate T is displayed. In this case, when the second pattern emission unit 130 is in a normal state, the second optical pattern P2 is detected at the reference position ref1. However, when the second pattern emission unit 130 is not in a normal state, for example, when the second optical pattern P2 is displayed at a position higher than the reference position ref1 by a distance Δg in the acquired image, as illustrated in FIG. 8(b), the vertical emission angle of the second pattern emission unit 130 is less than a predetermined value θr. In this case, the vertical emission angle of the second pattern emission unit 130 may be adjusted.

However, when Δg is within a predetermined tolerance range, Δg may be stored in the data storage unit and may be used later in order to compensate for the position of the second optical pattern P2 when the distance to the obstacle from the position at which the second optical pattern P2 is displayed in the acquired image is calculated. Therefore, the distance to the obstacle may be calculated more accurately.

The image acquisition unit 140 is aligned such that the optical axis of the lens is oriented in the horizontal direction, and "θr" illustrated in FIG. 7 designates the view angle of the image acquisition unit 140, and is set to 100° or more, specifically, within the range of 100° to 110°, without being limited thereto.

The distance from the floor in the zone to be cleaned to the image acquisition unit 140 may range from approximately 145 mm to approximately 155 mm. In this case, in the image acquired by the image acquisition unit 140, the floor in the zone to be cleaned may appear after the position designated by d2, and "S2" designates the area of the floor, appearing in the acquired image, from the position d2 to the position d3, which is the center of the first optical pattern P1 (the intersection of the horizontal line Ph and the vertical line Pv). Particularly, when an obstacle is located in the area S2, the image acquisition unit 140 may acquire an image of the obstacle on which the first patterned light P1 is incident. Here, the distance from the main body 10 to d2 may be set within the range of 100 mm to 120 mm, and d3 may be located at a distance of approximately 400 mm from the robot cleaner 1, without being limited thereto.

In addition, in FIG. 7, "S1" designates the area in which the positions of the first optical pattern P1 and the second optical pattern P2 are reversed (the area from the robot cleaner 1 to a position d1). When an obstacle is located in the area S1, the first patterned light P1 is located above the second patterned light P2 in the acquired image. Here, d1 may be the position that is spaced apart from the robot cleaner 1 by a distance ranging from 70 mm to 80 mm, without being limited thereto.

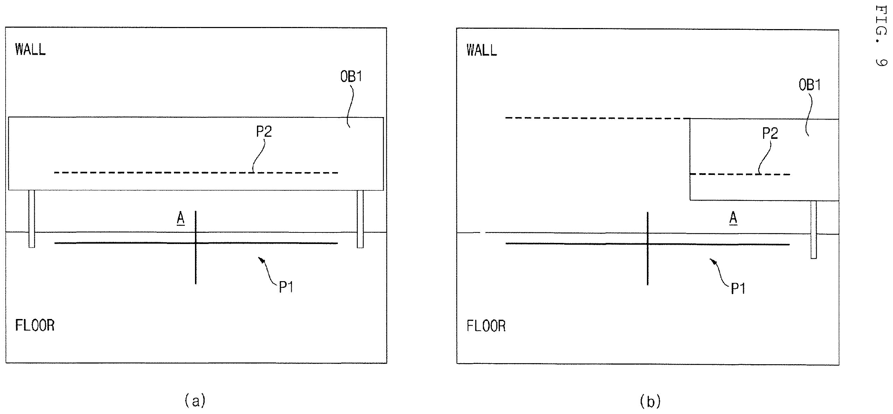

FIG. 9 shows a view (a) illustrating an image acquired when the robot cleaner is located at a first position and a first obstacle is located ahead of the robot cleaner and a view (b) illustrating an image acquired when the position of the robot cleaner is changed to a second position.

When an obstacle OB1, such as a bed, is present in the zone to be cleaned, with a space A being formed between the obstacle OB1 and the floor, the space A may be recognized, and particularly, the height of the space A may be identified, whereby it may be determined whether to pass through or bypass the obstacle OB1.

For example, as illustrated in FIG. 9(a), when the first patterned light P1 is incident on the floor in the space A and the second patterned light P2 is incident on a structure (e.g. a frame supporting a bed mattress) located on the space A, the obstacle information obtainer 220 included in the controller 200 may recognize that an obstacle is present above the portion where the first patterned light P1 is incident, and particularly, may determine the distance from the robot cleaner 1 to the obstacle OB1 based on the position of the second optical pattern P2 displayed in the acquired image. Further, since the vertical emission angle of the second pattern emission unit 130 is constant, the obstacle information obtainer 220 may determine the height from the floor in the zone to be cleaned to a portion where the second patterned light P2 is incident based on the distance to the obstacle OB1. Accordingly, based on these types of information, the obstacle information obtainer 220 may determine the height of the space A. Particularly, when it is determined that the height of the space A is less than the height of the main body 10, the travel controller 230 may control the travel driving unit 300 so that the main body 10 may bypass the obstacle OB1. On the other hand, when it is determined that the height of the space A is greater than the height of the main body 10, the travel controller 230 may control the travel driving unit 300 so that the main body 10 may enter or pass through the space A.

As illustrated in FIG. 9(b), when the vertical line Pv of the first patterned light P1 extends to the wall, when the horizontal line Pv thereof is incident on the floor, and when the second patterned light P2 is partially incident on the obstacle OB1 such that a portion of the second patterned light P2 is incident on the obstacle OB1 and another portion thereof is incident on the wall, the obstacle information is obtained based only on the first optical pattern P1 displayed in the acquired image if the second pattern emission unit 130 is not provided. In this case, only the fact that there is a wall ahead of the robot cleaner may be identified. However, as in the exemplary embodiment, the second pattern emission unit 130 is provided, thereby further identifying that the obstacle OB1 is present between the robot cleaner 1 and the wall. Particularly, using the second patterned light P2 including the horizontal line Ph, the obstacle OB1 may be detected over a wider region in the horizontal direction, thereby enabling detection of the obstacle OB1 located in a region that is not within reach of the vertical line Pv of the first patterned light P1.

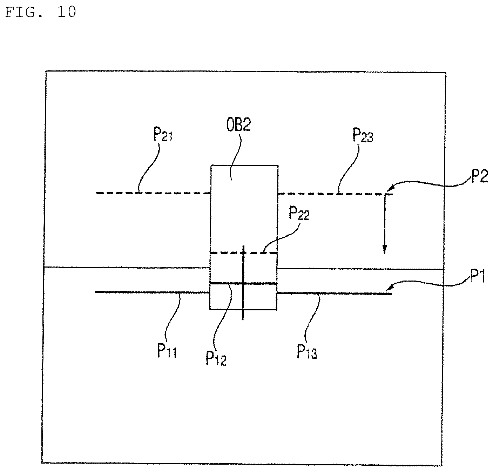

FIG. 10 is a view illustrating an image acquired when the first patterned light and the second patterned light are incident on an obstacle. Referring to FIG. 10, the robot cleaner 1 according to an embodiment of the present invention may concretely identify the stereoscopic shape of an obstacle based on the second patterned light P2, in addition to the obstacle information identified based on the first patterned light P1. For example, the actual height of an obstacle OB2 is too high for the robot cleaner 1 to pass over while traveling, but at the current position of the robot cleaner 1, the first optical pattern P1 is incident on a lower portion of the obstacle. In this case, if the second pattern emission unit 130 is not provided, the travel controller 230 determines that the main body 10 is capable of passing over the obstacle OB2, and controls the main body 10 to travel toward the obstacle OB2. As the main body 10 moves closer to the obstacle OB2, the position of the second optical pattern P2 is gradually increased in the acquired image. Upon determining that the height of the obstacle OB2 exceeds a height over which the main body 10 is capable of passing, the travel controller 230 controls the travel driving unit 300 so that the main body 10 bypasses the obstacle OB2.

By contrast, as in the exemplary embodiment, the second pattern emission unit 130 is provided, and the second patterned light P2 is incident on the obstacle OB2 at the current position of the robot cleaner 1. Thus, the height of the obstacle OB2 may be identified in advance, and a traveling path may be further optimized as well.

The obstacle information obtainer 220 may recognize a cliff that is located ahead of the robot cleaner 1 based on the length of the vertical line Pv displayed in the acquired image. When a cliff (e.g. stairs) is present ahead of the robot cleaner 1, the front end of the vertical line Pv may extend to a portion below the cliff. The portion of the vertical line Pv that is emitted to a portion below the cliff is not displayed in the acquired image, and thus the length of the vertical line Pv displayed in the acquired image is decreased. Accordingly, when the length of the vertical line Pv is decreased, the obstacle information obtainer 220 may determine that a cliff is present ahead of the robot cleaner 1, and based on the cliff information recognized in this manner, the travel controller 230 may control the travel driving unit 300 so that the robot cleaner 1 may travel along a path that does not lead to the cliff.

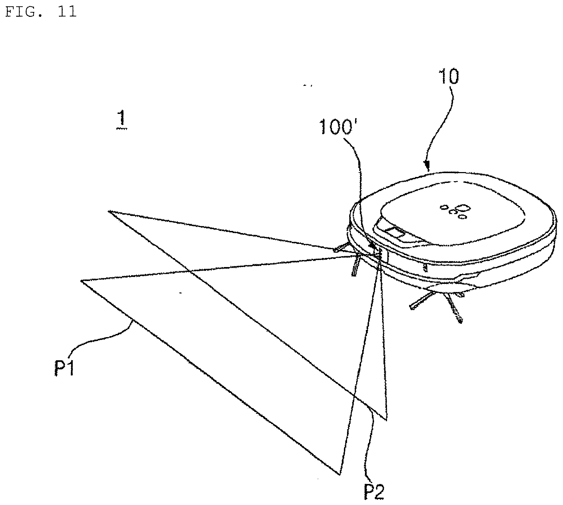

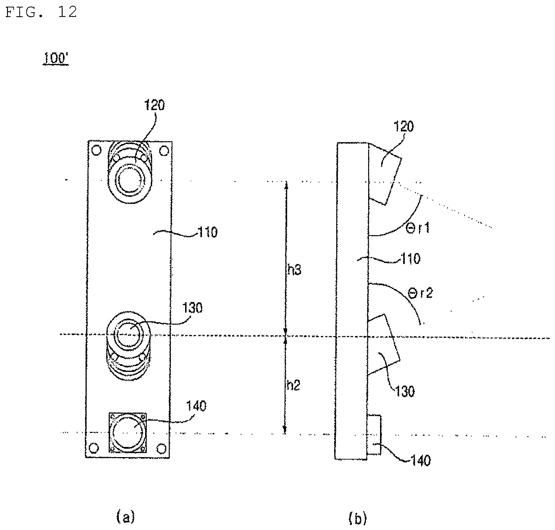

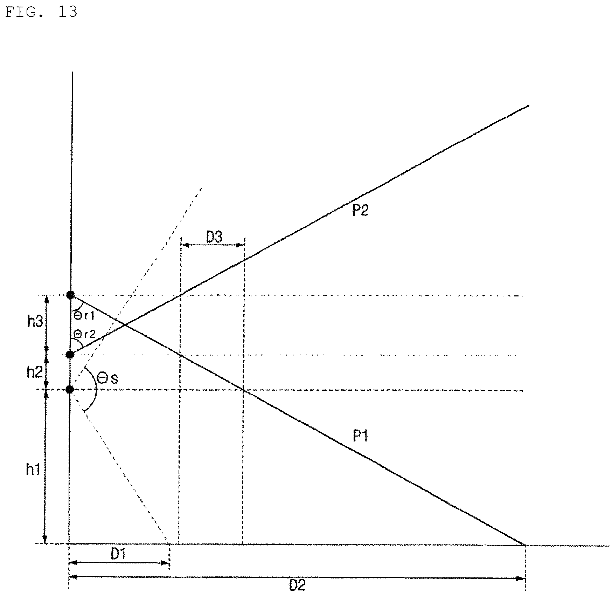

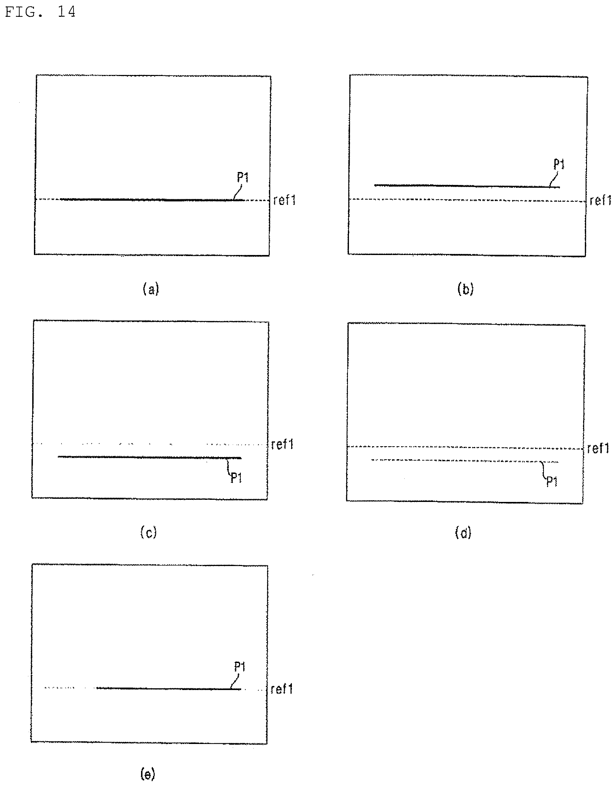

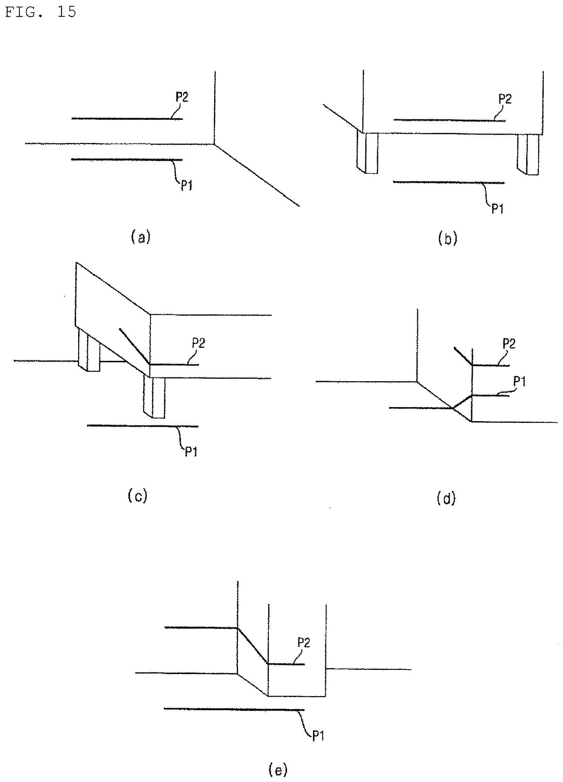

FIG. 11 is a perspective view of a robot cleaner according to another embodiment of the present invention. FIG. 12 shows a front view (a) and a side view (b) of an obstacle sensor illustrated in FIG. 11. FIG. 13 is a view illustrating the radiation range and the obstacle detection range of the obstacle sensor of FIG. 12. FIG. 14 shows views illustrating patterns of light emitted by a first pattern emission unit of the obstacle sensor of FIG. 12. FIG. 15 shows views illustrating patterns of light emitted to an obstacle in the robot cleaners according to the embodiments of the present invention.

Referring to FIGs. 11 and 12, an obstacle sensor 100' includes a first pattern emission unit 120, a second pattern emission unit 130 and an image acquisition unit 140. The image acquisition unit 140 captures an image of a predetermined area ahead of the main body 10. The first pattern emission unit 120 emits a first pattern of light downwards to the area. The second pattern emission unit 130 is provided below the first pattern emission unit 120, and emits a second pattern of light upwards to the area.

The first pattern emission unit 120 may emit a first pattern of light P1 (hereinafter referred to as first patterned light) forwards and downwards from the main body 10. Thus, the first patterned light P1 may be incident on the floor in the zone to be cleaned. The first patterned light P1 may have a horizontal-line-shaped pattern. Alternatively, the first patterned light P1 may have a cross-shaped pattern that includes a horizontal line and a vertical line that intersect (see FIG. 1).

The first pattern emission unit 120, the second pattern emission unit 130 and the image acquisition unit 140 may be aligned with each other in the vertical direction. The image acquisition unit 140 is located below the first pattern emission unit 120 and the second pattern emission unit 130, without being limited thereto. The image acquisition unit 140 may be located above the first pattern emission unit and the second pattern emission unit.

In the embodiment, the first pattern emission unit 120 may be located above the second pattern emission unit 130, and may emit the first patterned light P1 forwards and downwards from the main body 10, to thereby sense an obstacle that is located lower than the first pattern emission unit 120. The second pattern emission unit 130 may be located below the first pattern emission unit 120, and may emit a second pattern of light P2 (hereinafter referred to as second patterned light) forwards and upwards from the main body 10. Thus, the second patterned light P2 may be incident on the wall or at least a portion of an obstacle that is located at a position higher than at least the second pattern emission unit 130 from the floor in the zone to be cleaned.

The second patterned light P2 may have a different pattern from that of the first patterned light P1, and may include, for example, a horizontal line. The horizontal line may not necessarily be a continuous line, but may be a dotted line.

Similar to the above-described embodiment, the horizontal emission angle θh (see FIG. 2) of the first pattern emission unit 120 may be set within the range of 130° to 140°, without being limited thereto. Similar to the first pattern emission unit 120, the horizontal emission angle of the second pattern emission unit 130 may be set within the range of 130° to 140°. In some embodiments, the second pattern emission unit 130 may emit the patterned light P2 at the same horizontal emission angle as the first pattern emission unit 120.

The image acquisition unit 140 may acquire a forward image of the main body 10.

Referring to FIG. 13, the first pattern emission unit 120 and the second pattern emission unit 130 may be symmetrically arranged. The first pattern emission unit 120 and the second pattern emission unit 130 may be disposed at upper and lower positions while being spaced apart from each other at a distance h3. The first pattern emission unit emits the first patterned light downwards, and the second pattern emission unit emits the second patterned light upwards so that the first patterned light and the second patterned light cross each other.

The image acquisition unit 140 may be downwards spaced apart from the second pattern emission unit by a distance h2, and may capture a forward image of the main body 10 at a view angle θs relative to the vertical direction. The image acquisition unit 140 is installed at a distance h1 from the floor. The image acquisition unit 140 may be installed at a position where the capture of a forward image of the robot cleaner 1 is not obstructed, in consideration of a bumper (not illustrated), which forms the lower end of the front surface of the main body 10, or the shape of the traveling or cleaning structure of the robot cleaner 1.

The first pattern emission unit 120 or the second pattern emission unit 130 is installed such that the direction in which the optical axis of the lens included in each of the pattern emission units 120 and 130 is oriented forms a predetermined emission angle.

The first pattern emission unit 120 emits the first patterned light P1 downwards at a first vertical emission angle θr1, and the second pattern emission unit 130 emits the second patterned light P2 upwards at a second vertical emission angle θr2. The first vertical emission angle and the second vertical emission angle are different from each other. However, in some embodiments, the first vertical emission angle and the second vertical emission angle may be set to be the same as each other. Specifically, the first vertical emission angle and the second vertical emission angle may be set within the range of 50° to 75°, without being limited thereto. For example, the first vertical emission angle may be set within the range of 60° to 70°, and the second vertical emission angle may be set within the range of 50° to 55°. These angles may be changed depending on the structure of the lower bumper of the robot cleaner 1, the sensed distance to an object below the robot cleaner 1, or the height to be sensed.

When the patterned light emitted from the first pattern emission unit 120 and/or the second pattern emission unit 130 is incident on an obstacle, the positions of the optical patterns P1 and P2 in the acquired image vary depending on the distance to the obstacle from the first pattern emission unit 120. For example, when the first patterned light P1 and the second patterned light P2 are incident on a specific obstacle, as the obstacle is located closer to the robot cleaner 1, the first optical pattern P1 is displayed at a higher position in the acquired image, whereas the second optical pattern P2 is displayed at a lower position. That is, data on distances to obstacles, which correspond to rows (lines configured as pixels arranged in the transverse direction) constituting an image generated by the image acquisition unit 140, is stored in advance. When the optical patterns P1 and P2, detected in the image acquired by the image acquisition unit 140, are detected in a specific row, the position of the obstacle may be estimated based on data on the distance to the obstacle that corresponds to the row.

The image acquisition unit 140 is aligned such that the optical axis of the lens is oriented in the horizontal direction, and "θs" illustrated in FIG. 13 designates the view angle of the image acquisition unit 140, and is set to 100° or more, specifically, within the range of 100° to 110°, without being limited thereto.

In addition, the distance from the floor in the zone to be cleaned to the image acquisition unit 140 may be set within the range of approximately 60 mm to approximately 70 mm. In the image acquired by the image acquisition unit 140, the floor in the zone to be cleaned may appear after a distance D1 from the image acquisition unit. "D2" designates the distance to a position at which the first optical pattern P1 is displayed on the floor appearing in the acquired image. When an obstacle is located at the distance D2, the image acquisition unit 140 may acquire an image of the obstacle on which the first patterned light P1 is incident. When the obstacle approaches the robot cleaner 1 within the distance D2, the first optical pattern is displayed above a reference position ref1 in response to the first patterned light P1 incident on the obstacle.

Referring to FIG. 7, the reference position ref1 is a reference to determine a normal state, i.e. the state in which no obstacle is present ahead of the robot cleaner and in which the floor on which the robot cleaner is placed is flat. The reference position ref1 is the position at which the first optical pattern P1 is displayed when the main body 10 is placed on a flat floor. When the first optical pattern P1 is emitted to D2, the image acquisition unit 140 is located at a position at which the image of the first optical pattern P1 is captured.

The distance D1 from the main body 10 may range from 100 mm to 150 mm, and the distance D2 from the main body 10 may range from 180 mm to 280 mm, without being limited thereto. "D3" designates the distance from the furthest protruding portion of the front surface of the main body to the position at which the second patterned light is incident. Since the main body senses obstacles while traveling, the distance D3 is the minimum distance within which the main body may sense an obstacle located ahead of (above) the main body without colliding with the obstacle. D3 may be set within the range of approximately 23 mm to approximately 30 mm.

On the other hand, while the main body 10 is traveling, the obstacle information obtainer 220 determines that a cliff is present near the robot cleaner 1 when the first optical pattern P1 disappears from the acquired image or when only a portion of the first optical pattern is displayed in the acquired image.

When the first optical pattern is not displayed in the acquired image, the obstacle information obtainer 220 may recognize a cliff that is located ahead of the robot cleaner 1. When a cliff (e.g. stairs) is present ahead of the robot cleaner 1, the first patterned light P1 is not incident on the floor, and thus disappears from the acquired image.

The obstacle information obtainer 220 may determine, based on the distance D2, that a cliff is present at the distance D2 ahead of the main body 10. When the first patterned light P1 has a cross-shaped pattern, the horizontal line disappears and only the vertical line is displayed, whereby the obstacle information obtainer 220 may determine that a cliff is present.

In addition, when a portion of the first optical pattern is not displayed, the obstacle information obtainer 220 may determine that a cliff is present at the left side or the right side of the robot cleaner 1. When the right portion of the first optical pattern is not displayed, the obstacle information obtainer 220 may determine that a cliff is present at the right side.

Therefore, based on the cliff information recognized by the obstacle information obtainer 220, the travel controller 230 may control the travel driving unit 300 so that the robot cleaner 1 may travel along a path that does not lead to the cliff.

In addition, when a cliff is present ahead of the robot cleaner, the travel controller 230 may control the robot cleaner to move forwards a predetermined distance, for example, the distance D2 or a distance shorter than the distance D2, to again identify the presence of a cliff using a cliff sensor installed on the bottom of the main body. The robot cleaner 1 may first identify a cliff based on the acquired image, and may secondarily identify the cliff using the cliff sensor after traveling a predetermined distance.

The pattern extractor 210 extracts the first optical pattern or the second optical pattern from the acquired image input from the image acquisition unit 140, and provides the extracted first optical pattern or second optical pattern to the obstacle information obtainer 220.

The obstacle information obtainer 220 analyzes the first optical pattern or the second optical pattern extracted from the acquired image and compares the position of the first optical pattern with the predetermined reference position ref1, thereby determining the presence of an obstacle.

As illustrated in FIG. 14(a), when the horizontal line of the first optical pattern P1 is located at the reference position ref1, it is determined that the robot cleaner is in a normal state. Here, the normal state is a state in which the floor is even and flat and in which the robot cleaner may continue to travel because no obstacle is present ahead of the robot cleaner.

When an obstacle is present at a certain height ahead of the robot cleaner, the second optical pattern P2 is incident on the obstacle and is displayed in the acquired image. Thus, in the normal state, the second optical pattern P2 is generally not displayed.

As illustrated in FIG. 14(b), when the horizontal line of the first optical pattern P1 is located above the reference position ref1, the obstacle information obtainer 220 determines that an obstacle is present ahead of the robot cleaner.

When an obstacle is detected by the obstacle information obtainer 220, as illustrated in the drawings, the travel controller 230 controls the travel driving unit 300 so that the main body may bypass the obstacle. The obstacle information obtainer 220 may determine the position and size of the detected obstacle based on the positions of the first optical pattern P1 and the second optical pattern and based on whether the second optical pattern is displayed. In addition, the obstacle information obtainer 220 may determine the position and size of the obstacle based on a change in the first optical pattern and the second optical pattern displayed in the acquired image while traveling.

The travel controller 230 determines, based on the obstacle information input from the obstacle information obtainer 220, whether to continue to travel or bypass the obstacle, and controls the travel driving unit 300 based on the determination. For example, when the height of an obstacle is lower than a predetermined height or when the main body is capable of entering the space between an obstacle and the floor, the travel controller 230 determines that the main body may continue to travel.

As illustrated in FIG. 14(c), the first optical pattern P1 may be displayed at a lower position than the reference position ref1. When the first optical pattern P1 is displayed at a lower position than the reference position, the obstacle information obtainer 220 determines that a downhill slope is present. When a cliff is present, the first optical pattern P1 disappears, and thus a downhill slope may be distinguished from a cliff.

As illustrated in FIG. 14(d), when the first optical pattern is not displayed, the obstacle information obtainer 220 determines that a cliff is present in a traveling direction.

In addition, as illustrated in FIG. 14(e), when a portion of the first optical pattern is not displayed, the obstacle information obtainer 220 may determine that a cliff is present at the left side or the right side. In the case shown, the obstacle information obtainer 220 determines that a cliff is present at the left side of the main body 10.

When the first optical pattern P1 has a cross-shaped pattern, the presence of an obstacle may be determined based on both the position of the horizontal line and the length of the vertical line.

Referring to FIG. 15, when the patterned light emitted from the obstacle sensor 100' is incident on an obstacle and the corresponding optical pattern is thus displayed in the acquired image, the obstacle information obtainer 220 may determine the position, size and shape of the obstacle.

As illustrated in FIG. 15(a), when a wall is present ahead of the main body, which is traveling, the first patterned light is incident on the floor and the second patterned light is incident on the wall. Thereby, the first optical pattern P1 and the second optical pattern P2 are displayed as two horizontal lines in the acquired image. At this time, when the distance to the wall is greater than D2, the first optical pattern P1 is displayed at the reference position ref1 and the second optical pattern is displayed, whereby the obstacle information obtainer 220 may determine that an obstacle is present.

On the other hand, when the distance from the main body 10 to the wall is less than the distance D2, the first patterned light is incident on the wall, rather than on the floor. Therefore, in the acquired image, the first optical pattern is displayed above the reference position ref1, and the second optical pattern is displayed above the first optical pattern. As the main body moves closer to the obstacle, the second optical pattern is displayed at a lower position. Thus, the second optical pattern is displayed at a lower position than in the situation in which the distance between the wall and the main body 10 is greater than D2. In either situation, the second patterned light is displayed above the reference position and the first optical pattern.

As a result, the obstacle information obtainer 220 may calculate the distance to the obstacle, i.e. the wall, through the first optical pattern and the second optical pattern.

As illustrated in FIG. 15(b), when an obstacle, such as a bed or a dresser, is present ahead of the main body, the first patterned light P1 and the second patterned light P2 are respectively incident, as two horizontal lines, on the floor and on the obstacle.

The obstacle information obtainer 220 determines the obstacle based on the first optical pattern and the second optical pattern. The obstacle information obtainer 220 may determine the height of the obstacle based on the position of the second optical pattern and variation in the second optical pattern that occurs while the main body approaches the obstacle. Thereby, the travel controller 230 determines whether the main body is capable of entering a space below the obstacle, and controls the travel driving unit 300 based on the determination.

For example, when an obstacle, such as a bed, is present in the zone to be cleaned, with a space being formed between the obstacle and the floor, the space may be recognized, and particularly, the height of the space may be identified, whereby it may be determined whether to pass through or bypass the obstacle. When it is determined that the height of the space is less than the height of the main body 10, the travel controller 230 may control the travel driving unit 300 so that the main body 10 bypasses the obstacle. Conversely, when it is determined that the height of the space is greater than the height of the main body 10, the travel controller 230 may control the travel driving unit 300 so that the main body 10 enters or passes through the space.

At this time, although the first optical pattern and the second optical pattern are displayed as two horizontal lines in FIG. 15(a) described above, the obstacle information obtainer 220 may distinguish the state of FIG. 15(a) and the state of FIG. 15(b) from each other because the distances between the first optical pattern and the second optical pattern are different. In addition, in FIG. 15(a), the first optical pattern is displayed at a higher position than the reference position as the distance to the obstacle is gradually decreased. However, as illustrated in FIG. 15(b), when an obstacle is located higher than the robot cleaner, even if the robot cleaner approaches the obstacle within a given distance, the first optical pattern P1 is displayed at the reference position ref1, and the position of the second optical pattern P2 is changed. Therefore, the obstacle information obtainer 220 may distinguish the kind of the obstacle.

As illustrated in FIG. 15(c), when the robot cleaner is located near a corner of an obstacle such as a bed or a dresser, the first patterned light P1 is radiated as a horizontal line on the floor, and the second patterned light P2 is radiated on the corner of the obstacle. Thus, a portion of the second patterned light is displayed as a horizontal line and a remaining portion thereof is displayed as a diagonal line. Since the second optical pattern is located at a higher position as the obstacle is located farther from the main body 10, a portion of the second optical pattern is displayed as an upwards bent diagonal line when radiated on the side surface of the obstacle, and a remaining portion thereof is displayed as a horizontal line when radiated on the front surface of the obstacle.

As illustrated in FIG. 15(d), when the main body 10 approaches the corner of a wall within a given distance, a portion of the first patterned light P1 is displayed as a horizontal line at a higher position than the reference position, another portion thereof, which is radiated on the side surface of the corner, is displayed as a downwards bent diagonal line, and the remaining portion thereof, which is radiated on the floor, is displayed as a horizontal line at the reference position.

Similar to the situation shown in FIG. 15(c), a portion of the second patterned light is displayed as a horizontal line and a remaining portion thereof, which is radiated on the side surface of the corner, is displayed as an upwards bent diagonal line.

In addition, as illustrated in FIG. 15(e), in the case of an obstacle that protrudes from the wall, the first optical pattern is displayed as a horizontal line at the reference position ref1. A portion of the second optical pattern P2, which is radiated on the protruding surface, is displayed as a horizontal line, another portion thereof, which is radiated on the side surface of the protruding surface, is displayed as an upwards bent diagonal line, and the remaining portion thereof, which is radiated on the wall, is displayed as a horizontal line.

Accordingly, the obstacle information obtainer 220 determines the position, shape, and size (height) of the obstacle based on the positions and shapes of the first patterned light and the second patterned light.

## Claims

1. A robot cleaner comprising:
a main body (10) configured to travel in a zone to be cleaned and to suction foreign substances from a floor in the zone to be cleaned;
an image acquisition unit (140) provided on the main body (10), the image acquisition unit (140) being configured to capture an image of a predetermined area ahead of the main body (10);
a first pattern emission unit (120) provided on the main body (10), the first pattern emission unit (120) being configured to emit a first pattern of light downwards to the predetermined area; a second pattern emission unit (130) provided on the main body (10) at a position below the first pattern emission unit (120), the second pattern emission unit (130) being configured to emit a second pattern of light upwards to the predetermined area; and
a controller (200) configured to detect an obstacle based on at least one of the first pattern and the second pattern included in the captured image,
wherein the controller (200) is configured to determine whether the detected obstacle is an obstacle spaced apart at least partially from the floor based on a position where the second pattern is detected, when the first pattern is detected at a reference position.

2. The robot cleaner according to claim 1, wherein the controller (200) is configured to:
measure a height of a space between the floor and the obstacle based on a change of the detection position of the second pattern, and
determine whether to enter the space between the floor and the obstacle based on the measured height.

3. The robot cleaner according to claim 1, wherein a path along which the first pattern of light is emitted and a path along which the second pattern of light is emitted cross each other when viewed from a side of the main body (10) .

4. The robot cleaner according to claim 3, wherein an intersection (d1) of the path along which the first pattern of light is emitted and the path along which the second pattern of light is emitted is located closer to the main body (10) than a point (d2) on the floor at which an image begins to be captured by the image acquisition unit (140).

5. The robot cleaner according to claim 4, wherein the image acquisition unit (140) comprises a lens having an optical axis that is oriented in a horizontal direction and has a view angle ranging from 100° to 110°, or
wherein the image acquisition unit (140) captures an image of a portion of the floor that is located 110 mm to 120 mm or more from the main body (10).

6. The robot cleaner according to claim 4, wherein each of the first pattern and the second pattern comprises a horizontal line.

7. The robot cleaner according to claim 1, wherein the first pattern of light and the second pattern of light have different patterns from each other.

8. The robot cleaner according to claim 1, wherein the image acquisition unit (140), the first pattern emission unit (120) and the second pattern emission unit (130) are aligned with each other on a front surface of the main body (10) in a vertical direction.

9. The robot cleaner according to claim 8, wherein the image acquisition unit (140) is located below the first pattern emission unit (120) and the second pattern emission unit (130).

10. The robot cleaner according to claim 8, wherein the first pattern emission unit (120) emits the first pattern of light at a first vertical emission angle, and
wherein the second pattern emission unit (130) emits the second pattern of light at a second vertical emission angle.

11. The robot cleaner according to claim 8, wherein the image acquisition unit (140) is located between the first pattern emission unit (120) and the second pattern emission unit (130).

12. The robot cleaner according to claim 11, wherein the vertical emission angle ranges from 20° to 30°.

13. The robot cleaner according to claim 1, wherein the main body (10) comprises:
a casing (11) forming an external appearance;
a left wheel (36L) and a right wheel (36R) rotatably provided on the casing (11); and
a suction module (34) provided in the casing (11), the suction module (34) being configured to suction foreign substances from a floor in a zone to be cleaned,
wherein the image acquisition unit (140), the first pattern emission unit (120) and the second pattern emission unit (130) are provided on a front surface of the casing (11) .

14. The robot cleaner according to claim 13, further comprising:
a module frame (110) coupled to the front surface of the casing (11),
wherein the image acquisition unit (140), the first pattern emission unit (120) and the second pattern emission unit (130) are provided on the module frame (110).

15. The robot cleaner according to claim 13, wherein a path along which the first pattern of light is emitted and a path along which the second pattern of light is emitted cross each other when viewed from a side of the casing (11) .

## Patentansprüche

1. Robotischer Staubsauger, der aufweist:
einen Hauptkörper (10), der konfiguriert ist, um einer Zone, die gereinigt werden soll, zu fahren und um Fremdsubstanzen von einem Boden in der Zone, die gereinigt werden soll, zu saugen;
eine Bilderfassungseinheit (140), die in dem Hauptkörper (10) bereitgestellt ist, wobei die Bilderfassungseinheit (140) konfiguriert ist, um ein Bild eines vorgegebenen Bereichs vor dem Hauptkörper (10) aufzunehmen;
eine auf dem Hauptkörper (10) bereitgestellte erste Musteremissionseinheit (120), wobei die erste Musteremissionseinheit (120) konfiguriert ist, um ein erstes Lichtmuster nach unten zu dem vorgegebenen Bereich zu emittieren; eine auf dem Hauptkörper (10) bereitgestellte zweite Musteremissionseinheit (130) in einer Position unterhalb der ersten Musteremissionseinheit (120), wobei die zweite Musteremissionseinheit (130) konfiguriert ist, um ein zweites Lichtmuster nach oben zu dem vorgegebenen Bereich zu emittieren; und
eine Steuerung (200), die konfiguriert ist, um basierend auf dem ersten Muster und/oder dem zweiten Muster, die in dem aufgenommenen Bild enthalten sind, ein Hindernis zu detektieren,
wobei die Steuerung (200) konfiguriert ist, um basierend auf einer Position, wo das zweite Muster detektiert wird, wenn das erste Muster in einer Referenzposition detektiert wird, zu bestimmen, ob das detektierte Hindernis ein Hindernis ist, das wenigstens teilweise von dem Boden beabstandet ist.

2. Robotischer Staubsauger nach Anspruch 1, wobei die Steuerung (200) konfiguriert ist, um:
eine Höhe eines Raums zwischen dem Boden und dem Hindernis basierend auf einer Änderung der Detektionsposition des zweiten Musters zu messen, und
basierend auf der gemessenen Höhe zu bestimmen, ob in den Raum zwischen dem Boden und dem Hindernis eingedrungen werden soll.

3. Robotischer Staubsauger nach Anspruch 1, wobei ein Weg, entlang dem das erste Lichtmuster emittiert wird, und ein Weg, entlang dem das zweite Lichtmuster emittiert wird, einander kreuzen, wenn sie von einer Seite des Hauptkörpers (10) betrachtet werden.

4. Robotischer Staubsauger nach Anspruch 3, wobei eine Kreuzung (d1) des Wegs, entlang dem das erste Lichtmuster emittiert wird, und des Wegs, entlang dem das zweite Lichtmuster emittiert wird, näher an dem Hauptkörper (10) angeordnet ist als ein Punkt (d2) auf dem Boden, an dem ein Bild beginnt, das von der Bilderfassungseinheit (140) aufgenommen werden soll.

5. Roboterreiniger nach Anspruch 4, wobei die Bilderfassungseinheit (140) eine Linse mit einer optischen Achse aufweist, die in einer Horizontalrichtung orientiert ist und einen Sichtwinkel im Bereich von 100° bis 110° hat, oder
wobei die Bilderfassungseinheit (140) ein Bild eines Abschnitts des Bodens aufnimmt, das 110 mm bis 120 mm oder mehr von dem Hauptkörper (10) weg angeordnet ist.

6. Robotischer Staubsauger nach Anspruch 4, wobei das erste Muster und das zweite Muster jeweils eine Horizontallinie aufweisen.

7. Robotischer Staubsauger nach Anspruch 1, wobei das erste Lichtmuster und das zweite Lichtmuster zueinander verschiedene Muster haben.

8. Robotischer Staubsauger nach Anspruch 1, wobei die Bilderfassungseinheit (140), die erste Musteremissionseinheit (120) und die zweite Musteremissionseinheit (130) in einer Vertikalrichtung auf einer vorderen Oberfläche des Hauptkörpers (10) ausgerichtet sind.

9. Robotischer Staubsauger nach Anspruch 8, wobei die Bilderfassungseinheit (140) unterhalb der ersten Musteremissionseinheit (120) und der zweiten Musteremissionseinheit (130) angeordnet ist.

10. Robotischer Staubsauger nach Anspruch 8, wobei die erste Musteremissionseinheit (120) das erste Lichtmuster in einem ersten vertikalen Emissionswinkel emittiert, und
wobei die zweite Musteremissionseinheit (130) das zweite Lichtmuster in einem zweiten vertikalen Emissionswinkel emittiert.

11. Robotischer Staubsauger nach Anspruch 8, wobei die Bilderfassungseinheit (140) zwischen der ersten Musteremissionseinheit (120) und der zweiten Musteremissionseinheit (130) angeordnet ist.

12. Robotischer Staubsauger nach Anspruch 11, wobei der vertikale Emissionswinkel von 20° bis 30° reicht.

13. Robotischer Staubsauger nach Anspruch 1, wobei der Hauptkörper (10) aufweist:
ein Gehäuse (11), das ein äußeres Erscheinungsbild bildet;
ein linkes Rad (36L) und ein rechtes Rad (36R), die auf dem Gehäuse (11) drehbar bereitgestellt sind; und
ein Saugmodul (34), das in dem Gehäuse (11) bereitgestellt ist, wobei das Saugmodul (34) konfiguriert ist, um Fremdsubstanzen in einer Zone, die gereinigt werden soll, von einem Boden zu saugen,
wobei die erste Bilderfassungseinheit (140), die erste Musteremissionseinheit (120) und die zweite Musteremissionseinheit (130) auf einer vorderen Oberfläche des Gehäuses (11) bereitgestellt sind.

14. Robotischer Staubsauger nach Anspruch 13, der ferner aufweist:
einen Modulrahmen (110), der mit der vorderen Oberfläche des Gehäuses (11) gekoppelt ist,
wobei die Bilderfassungseinheit (140), die erste Musteremissionseinheit (120) und die zweite Musteremissionseinheit (130) auf dem Modulrahmen (110) bereitgestellt sind.

15. Robotischer Staubsauger nach Anspruch 13, wobei ein Weg, entlang dem das erste Lichtmuster emittiert wird, und ein Weg, entlang dem das zweite Lichtmuster emittiert wird, einander kreuzen, wenn sie von einer Seite des Gehäuses (11) betrachtet werden.

## Revendications

1. Robot nettoyeur comprenant :
un corps principal (10) configuré pour se déplacer dans une zone devant être nettoyée et pour aspirer des substances étrangères d'un sol dans la zone devant être nettoyée ;
une unité d'acquisition d'image (140) prévue sur le corps principal (10), l'unité d'acquisition d'image (140) étant configurée pour capturer une image d'une zone prédéterminée en avant du corps principal (10) ;
une première unité d'émission de motif (120) prévue sur le corps principal (10), la première unité d'émission de motif (120) étant configurée pour émettre un premier motif de lumière vers le bas sur la zone prédéterminée ;
une seconde unité d'émission de motif (130) prévue sur le corps principal (10) à une position en dessous de la première unité d'émission de motif (120), la seconde unité d'émission de motif (130) étant configurée pour émettre un second motif de lumière vers le haut sur la zone prédéterminée ; et
un dispositif de commande (200) configuré pour détecter un obstacle sur la base d'au moins un du premier motif et du second motif inclus dans l'image capturée,
dans lequel le dispositif de commande (200) est configuré pour déterminer si l'obstacle détecté est un obstacle espacé au moins partiellement du sol sur la base d'une position où le second motif est détecté, lorsque le premier motif est détecté à une position de référence.

2. Robot nettoyeur selon la revendication 1, dans lequel le dispositif de commande (200) est configuré pour :
mesurer une hauteur d'un espace entre le sol et l'obstacle sur la base d'un changement de la position de détection du second motif, et
déterminer s'il faut entrer dans l'espace entre le sol et l'obstacle sur la base de la hauteur mesurée.

3. Robot nettoyeur selon la revendication 1, dans lequel un trajet le long duquel le premier motif de lumière est émis et un trajet le long duquel le second motif de lumière est émis se croisent lorsqu'ils sont observés depuis un côté du corps principal (10).

4. Robot nettoyeur selon la revendication 3, dans lequel une intersection (d1) du trajet le long duquel le premier motif de lumière est émis et du trajet le long duquel le second motif de lumière est émis est située plus près du corps principal (10) qu'un point (d2) sur le sol auquel une image commence à être capturée par l'unité d'acquisition d'image (140).

5. Robot nettoyeur selon la revendication 4, dans lequel l'unité d'acquisition d'image (140) comprend une lentille ayant un axe optique qui est orienté dans une direction horizontale et a un angle de vue allant de 100° à 110°, ou
dans lequel l'unité d'acquisition d'image (140) capture une image d'une partie du sol qui est située dans une plage allant de 110 mm à 120 mm ou plus par rapport au corps principal (10).

6. Robot nettoyeur selon la revendication 4, dans lequel chacun du premier motif et du second motif comprend une ligne horizontale.

7. Robot nettoyeur selon la revendication 1, dans lequel le premier motif de lumière et le second motif de lumière ont des motifs différents l'un de l'autre.

8. Robot nettoyeur selon la revendication 1, dans lequel l'unité d'acquisition d'image (140), la première unité d'émission de motif (120) et la seconde unité d'émission de motif (130) sont alignées les unes avec les autres sur une surface avant du corps principal (10) dans une direction verticale.

9. Robot nettoyeur selon la revendication 8, dans lequel l'unité d'acquisition d'image (140) est située en dessous de la première unité d'émission de motif (120) et de la seconde unité d'émission de motif (130).

10. Robot nettoyeur selon la revendication 8, dans lequel la première unité d'émission de motif (120) émet le premier motif de lumière à un premier angle d'émission vertical, et
dans lequel la seconde unité d'émission de motif (130) émet le second motif de lumière à un second angle d'émission vertical.

11. Robot nettoyeur selon la revendication 8, dans lequel l'unité d'acquisition d'image (140) est située entre la première unité d'émission de motif (120) et la seconde unité d'émission de motif (130).

12. Robot nettoyeur selon la revendication 11, dans lequel l'angle d'émission vertical va de 20° à 30°.

13. Robot nettoyeur selon la revendication 1, dans lequel le corps principal (10) comprend :
un boîtier (11) formant un aspect extérieur ;
une roue gauche (36L) et une roue droite (36R) prévues de manière rotative sur le boîtier (11) ; et
un module d'aspiration (34) prévu dans le boîtier (11), le module d'aspiration (34) étant configuré pour aspirer des substances étrangères d'un sol dans une zone devant être nettoyée,
dans lequel l'unité d'acquisition d'image (140), la première unité d'émission de motif (120) et la seconde unité d'émission de motif (130) sont prévues sur une surface avant du boîtier (11).

14. Robot nettoyeur selon la revendication 13, comprenant en outre :
un châssis de module (110) couplé à la surface avant du boîtier (11),
dans lequel l'unité d'acquisition d'image (140), la première unité d'émission de motif (120) et la seconde unité d'émission de motif (130) sont prévues sur le châssis de module (110).

15. Robot nettoyeur selon la revendication 13, dans lequel un trajet le long duquel le premier motif de lumière est émis et un trajet le long duquel le second motif de lumière est émis se croisent lorsqu'ils sont observés depuis un côté du boîtier (11).
